# EUROPEAN PATENT APPLICATION

(11) **EP 2 570 892 A1**
(43) Date of publication of application: **20.03.2013**
(21) Application number: 11181493.5
(22) Date of filing: 15.09.2011
(51) Int. Cl.: G06F 3/023, H03K 17/96

(54) **Electronic device and method of character entry**

(71) Applicant: Research In Motion Limited, Waterloo, ON N2L 3W8 (CA)
(72) Inventor: Pasquero, Jerome, Waterloo, Ontario N2L 3W8 (CA); Walker, David, Ryan, Waterloo, Ontario N2L 3W8 (CA); Loney, Eric, Philip, Smiths Falls, Ontario K7A 4S5 (CA)
(74) Representative: MERH-IP Matias Erny Reichl Hoffmann

(57) **Abstract**

A method includes receiving a selection of a character from a keyboard of a portable electronic device, adding the character to a character string, identifying candidate objects in reference data that include characters that match the character string, and displaying a plurality of the candidate objects on a display . When a gesture is detected on the keyboard, an object of the plurality of candidate objects, that is associated with the gesture, is identified, and the object is selected.

## Description

### FIELD OF TECHNOLOGY

The present disclosure relates to electronic devices including, but not limited to, portable electronic devices and their control.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones (smart phones), Personal Digital Assistants (PDAs), tablet computers, and laptop computers, with wireless network communications or near-field communications connectivity such as Bluetooth® capabilities.

Portable electronic devices such as PDAs, or tablet computers are generally intended for handheld use and ease of portability. Smaller devices are generally desirable for portability. A touch-sensitive input device, such as a touchscreen display, is particularly useful on handheld devices, which are small and may have limited space for user input and output.

### SUMMARY

According to one example, a method includes receiving a selection of a character from a keyboard of a portable electronic device, adding the character to a character string, identifying candidate objects in reference data that include characters that match the character string, and displaying a plurality of the candidate objects on a display spaced from the keyboard. When a gesture is detected on the keyboard, an object of the plurality of candidate objects, that is associated with the gesture, is identified, and the object is selected.

According to another example, an electronic device includes a keyboard including touch-sensitive keys, a display, and a processor. The processor is coupled to the display and the keyboard to receive a selection of a character from the keyboard, add the character to a character string, identify candidate objects in reference data that include characters that match the character string, display a plurality of the candidate objects on a display spaced from the keyboard, and when a gesture is detected on the keyboard, identify one object of a plurality of candidate objects that is associated with the gesture and select the one object.

### BRIEF DESCRIPTION OF THE DRAWINGS

Embodiments of the present disclosure will now be described, by way of example only, with reference to the attached Figures, wherein:

FIG. 1 is a block diagram of an example of a portable electronic device in accordance with the disclosure;

Fig. 2 is a front view of an example of a portable electronic device in accordance with the disclosure;

FIG. 3 is a flowchart illustrating a method of controlling the portable electronic device in accordance with the disclosure; and

FIG. 4 through FIG. 6 are front views of an example of a portable electronic device in accordance with the disclosure.

### DETAILED DESCRIPTION

The following describes an electronic device and a method that includes receiving a selection of a character from a keyboard of a portable electronic device, adding the character to a character string, identifying candidate objects in reference data that include characters that match the character string, and displaying a plurality of the candidate objects on a display. When a gesture is detected on the keyboard, an object of the plurality of candidate objects, that is associated with the gesture, is identified, and the object is selected.

For simplicity and clarity of illustration, reference numerals may be repeated among the figures to indicate corresponding or analogous elements. Numerous details are set forth to provide an understanding of the examples described herein. The examples may be practiced without these details. In other instances, well-known methods, procedures, and components are not described in detail to avoid obscuring the examples described. The description is not to be considered as limited to the scope of the examples described herein.

The disclosure generally relates to an electronic device, such as a portable electronic device. Examples of portable electronic devices include mobile, or handheld, wireless communication devices such as pagers, cellular phones, cellular smart-phones, wireless organizers, personal digital assistants, wirelessly enabled notebook computers, tablet computers, mobile internet devices, and so forth. The portable electronic device may be a portable electronic device without wireless communication capabilities, such as handheld electronic games, digital photograph albums, digital cameras, media players, e-book readers, and so forth.

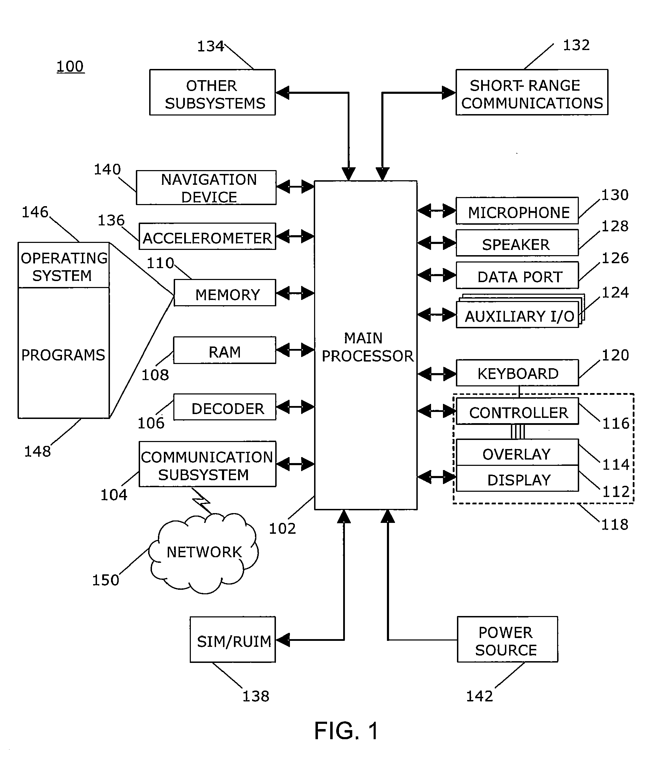

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display 112, a keyboard 120, an auxiliary input/output (I/O) subsystem 124, a data port 126, a speaker 128, a microphone 130, short-range communications 132, and other device subsystems 134. In the example illustrated in FIG. 1, the display 112 is part of a touch-sensitive display 118. Input via a graphical user interface may be provided utilizing the touch-sensitive display 118 or any other suitable device. User-interaction with a graphical user interface may be performed through a touch-sensitive overlay 114. The processor 102 interacts with the touch-sensitive overlay 114 via an electronic controller 116. Information, such as text, characters, symbols, images, icons, and other items that may be displayed or rendered on a portable electronic device, is displayed on the touch-sensitive display 118 via the processor 102. The processor 102 may interact with an accelerometer 136 that may be utilized to detect direction of gravitational forces or gravity-induced reaction forces.

The processor 102 also interacts with a navigation device 140 such as a touch-sensitive track pad, a trackball, an optical joystick, and so forth, to interface with a user to provide input. The navigation device 140 may be utilized, for example, to navigate or scroll through information on a display, control a cursor or other indicator, edit information, and so forth. In the examples shown, the navigation device 140 is located between the display 112 and the keyboard 120. "Input" as utilized hereinafter refers to gestures or other contact applied to the navigation device 140 or the interpretation of the gesture or contact by the navigation device 140.

To identify a subscriber for network access, the portable electronic device 100 may utilize a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs, applications, or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes a capacitive touch-sensitive overlay 114. The overlay 114 may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118. The processor 102 may determine attributes of the touch, including a location of a touch. Touch location data may include an area of contact or a single point of contact, such as a point at or near a center of the area of contact. When a touch begins, one or more signals are provided to the controller 116 and the origin of the touch may be determined from the signals. The origin may be a point or an area, for example. Signals may be provided to the controller at regular intervals in time for a touch, also known as sampling, such that changes in location of the touch may be detected. A touch may be detected from any suitable input member, such as a finger, thumb, appendage, or other objects, for example, a stylus, pen, or other pointer, depending on the nature of the touch-sensitive display 118. The controller 116 and/or the processor 102 may detect a touch by any suitable input member on the touch-sensitive display 118. Multiple simultaneous touches may be detected.

One or more gestures may also be detected by the touch-sensitive display 118. A gesture, such as a swipe, also known as a flick, is a particular type of touch on a touch-sensitive display 118 that begins at an origin point and continues to an end point. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture. A hover may be a touch at a location that is generally unchanged over a period of time or is associated with the same selection item for a period of time.

The keyboard 120 is separate and spaced from the touch-sensitive display 118. The keyboard 120 is a physical keyboard, including keys 204 which may be mechanical keys. The keys of the keyboard are also touch-sensitive to detect one or more touches on the keyboard 120. The keys may be touch-sensitive, for example, utilizing capacitive touch sensors made of suitable material such as ITO disposed on the keys. The processor 102 may interact with the touch sensors on the keys of the keyboard 120 via the electronic controller 116. Alternatively, the processor 102 may interact with the touch sensors on the keys of the keyboard via a separate controller. In the example in which the keys are also mechanical, the processor 102 may receive signals from a switch when a key is depressed as well as a signal from the controller upon detection of the touch.

Alternatively, touch sensors may be included under the keys of the keyboard 120, rather than on top of the keys, such that a touch on a key or on multiple keys may be detected by the touch-sensors. The touch sensors may be touch sensors in a single layer or may be provided by two capacitive touch sensor layers of patterned conductive material in a stack. The conductive material in this example may be any suitable material and is not limited to ITO or other transparent or translucent materials. Touch sensors under the keys of the keyboard may be utilized to detect a touch on the keyboard and to determine a touch location and direction of the touch when the touch is a gesture. The keys of the keyboard may therefore be thin and the sensitivity of the touch sensors is sufficient to detect the touch on the key, spaced from the touch sensitive layer.

One or more touches may be detected by the sensors of the keyboard 120. Attributes of the touch, including a location of a touch, may be determined. Touch location data may include an area or key at which contact is detected or a single point of contact on the keys, depending on the nature of the touch-sensors of the keyboard.

When a touch begins on a key one or more signals are provided to the controller and the location of the touch may be determined from the signals. Signals may be provided to the controller at regular intervals in time for a touch, also known as sampling, such that changes in location of the touch may be detected.

One or more gestures on the keyboard 120 may also be detected. A gesture, such as a swipe, may be identified by attributes of the gesture, including the origin point or key, the end point or key, and the direction, for example. Two points or keys may be utilized to determine a direction of the gesture. A gesture may extend across two or more keys of the keyboard 120.

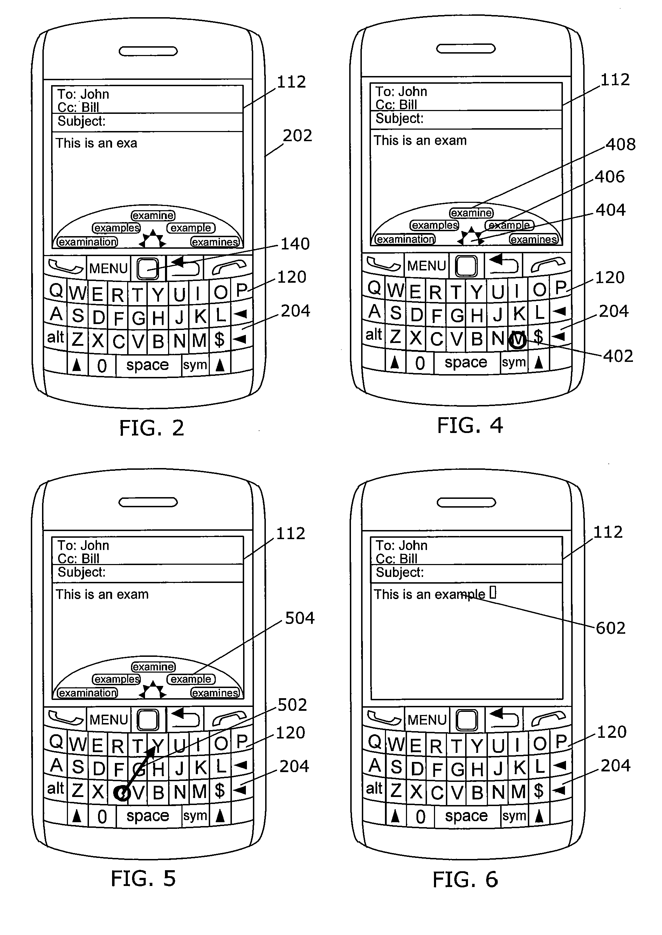

A front view of an example of the electronic device 100 is shown in FIG. 2. The electronic device 100 includes a housing 202 in which the display 112, the navigation device 140, and the keyboard 120 are disposed. The housing 202 is utilized to enclose components such as the components shown in FIG. 1.

The keyboard 120 includes the keys 204. The keys 204 may be mechanical keys that provide tactile feedback to a user when the keys 204 are depressed. Such mechanical keys may include, for example, mechanical switches disposed under keycaps. Alternatively, the keys 204 may include other actuators disposed under keycaps to provide tactile feedback. In the example illustrated in FIG. 2, the keyboard is a QWERTY keyboard. Other keyboards such as QWERTZ or AZERTY keyboards may be utilized.

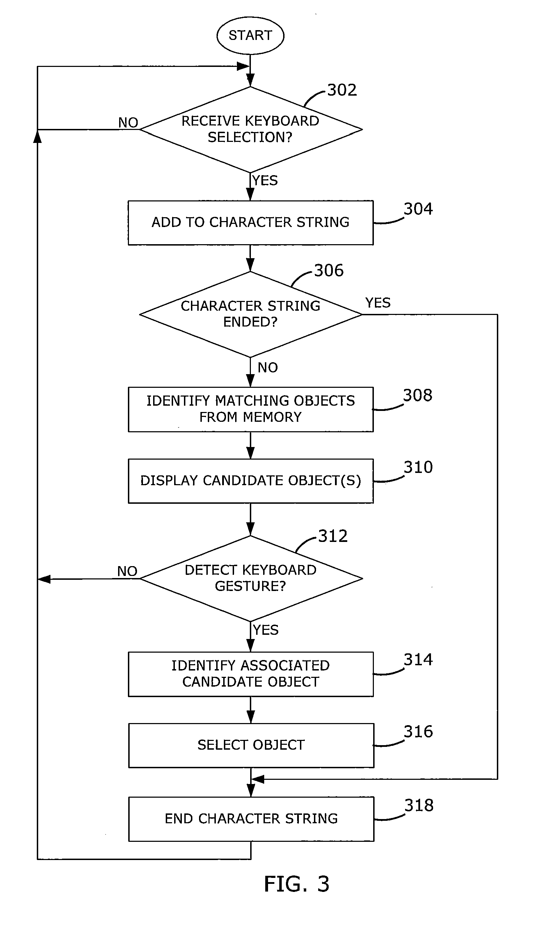

A flowchart illustrating a method of character entry at an electronic device is shown in FIG. 3. The method may be carried out by software executed, for example, by the processor 102. Coding of software for carrying out such a method is within the scope of a person of ordinary skill in the art given the present description. The method may contain additional or fewer processes than shown and/or described, and may be performed in a different order. Computer-readable code executable by at least one processor of the portable electronic device to perform the method may be stored in a computer-readable medium, such as a non-transitory computer-readable medium.

The process may be carried out in any suitable program or application in which characters, such as alphabetical, numerical, and symbolic characters, are input. Examples of suitable applications include email, text messaging, calendar, tasks, address book, map, Web browser, word processing, and so forth. Information from the application is displayed on the display 112 of the portable electronic device 100.

When a character selection is received at 302, upon selection of a key 204 of the keyboard 120, the process continues at 304. A key 204 of the keyboard 120 may be selected, for example, by depression of the key 204 when the keyboard 120 is a mechanical keyboard 120. Alternatively, the key 204 may be selected by touching the key 204 when the key 204 is touch-sensitive and not mechanical or depressible.

The selected character is added at 304 to a character string by displaying the character at a location on the display 112 at which the character is entered, e.g., at the location at which the cursor or indicator was located prior to receipt of the selection. The selected character may be added as the first character of the character string, when a previous character string has ended or a character sting has not been entered. Alternatively, the selected character may be added as an additional character in a string.

When the character ends a character string at 306, the process continues at 318 where the character string is ended. A character may end a character string at 306, for example, when a "space" is entered utilizing a space key on the keyboard 120, when a punctuation mark, such as a period, comma, colon, or semicolon, is entered, or when a previous character string is deleted.

When the character does not end the character string at 306, candidate objects in reference data having at least an initial portion or characters that match the character string are identified at 308. The reference data is searchable and may be utilized as part of a predictive text application. The reference data may include different types of linguistic objects such as dictionary entries, contact data records stored in a contacts database and acronyms, for example. The predictive text application may modify the reference data to add objects when an object, such as a word or set of characters, that is not already included, is entered by the user.

Optionally, the objects identified at 308 may be ordered based on a criteria. For example, the objects may be ordered based on frequency of use, previously entered word(s), recently entered word(s), alphabetical position, or context, such as an active application, for example. The criteria selected may be determined based on the predictive text application. Ordering of the matching candidate objects may be performed as the candidate objects in reference data are identified or following identification of all of the matching candidate objects.

Candidate objects identified at 308 are displayed on the display 112 at 310. The candidate objects may be displayed in the order determined. Depending on the number of candidate objects identified, some candidate objects may be displayed while others are not displayed. For example, the first five candidate objects in the order determined based on the criteria may be displayed. Other suitable numbers of candidate objects may be displayed. The candidate objects are displayed in a spaced relationship around a point on the display 112. The candidate objects are displayed in spaced relation around the point such that each candidate object is displayed at a different angular direction from the point on the display 112. For example, the candidate objects may be displayed to the left of the point, at the diagonal direction up and to the left of the point, directly up from the point, at the diagonal direction up and to the right of the point, and to the right. The terms right, left, up, and down are utilized for the purpose of providing a full explanation, are utilized with reference to the orientation of the displayed information as illustrated in the Figures, and are not otherwise limiting.

Each of the candidate objects displayed at 310 are selectable utilizing the keyboard 120. When a gesture is detected on the keyboard at 312, utilizing the touch sensors of the keyboard 120, the direction of the gesture is determined and is utilized to identify an associated candidate object at 314. A gesture is associated with a candidate object when the direction of the gesture is close to or matches, within an error threshold, the angular direction from the point on the display 112 to the candidate object. A closest angular direction, from the point on the display 112 to the candidate object, to the direction of the gesture may be determined to identify the associated candidate object. Alternatively, each candidate object may be associated with directions in circular sectors, such that a candidate object is identified when the direction of a gesture falls within the associated sectors.

The identified candidate object is selected at 316 and entered into a data entry field on the display 112. The character string is ended at 318 and additional characters that may be entered are added to a new character string.

Examples of character entry at portable electronic devices are illustrated in FIG. 4 through FIG. 6. In the example shown in FIG. 4, a key is selected as illustrated by the circle 402 on the key 204 associated with the letter M. The selection is received at 302 and the character "m" is added to the character string at 304. For the purpose of the present example, the character string includes previously entered characters and, with the addition of the character "m" is "exam", as illustrated on the display 112. The character string has not ended and matching objects are identified at 308. The five most common matching objects 408, including "examination", "examples", "examine", example", and "examines" are displayed on the display 112 at 310. The displayed objects 408 are spaced around a point 404 at or near a bottom edge of the display 112 and the associated gesture directions are indicated in this example by arrows around the point 404. The arrows may be utilized as a reminder of the gesture direction to select any one of the displayed objects 408.

Referring to FIG. 5, a gesture 502 is detected on the keyboard 120. The gesture 502 is generally diagonally up and to the right. The gesture is detected by the touch sensors on the keys 204 of the keyboard 120 at 312. The keys 204 of the keyboard 120 are not depressed. The associated candidate object is determined based on the direction of the detected gesture at 314. In this example, the associated candidate object is the word "example" 504. As illustrated in FIG. 6, the object "example" is selected and the word "example" is displayed in the character entry field 602 at 316. The character entry field 602 in the example illustrated in FIG. 2, and FIG. 4 through FIG. 6 is a body of an email. The method may be utilized to enter characters in any other suitable field in email or in any other suitable application. The character string is ended at 318 such that a new character that is entered begins a new character string.

The portable electronic device 100 is described to provide an example of one suitable electronic device. Many of the features or elements of the portable electronic device 100 described herein may be optional. For example, features such as the navigation device 140, the accelerometer, the short range communications 132, the communication subsystem 104, and so forth are optional. Furthermore, the electronic device may also include other features that are not described herein.

Utilizing the method described above, objects determined or identified utilizing predictive text or disambiguation may be selected by a gesture on a touch-sensitive physical keyboard that is spaced from a display. A user typing on the touch-sensitive physical keyboard, for example, by depressing the keys of the keyboard, may also gesture on the keyboard to select objects. Thus, an additional navigation device or touch-sensitive display or pad is not required for selection of the object, reducing the need for additional input devices. Further, time-consuming thumb or finger movement from the keyboard to select an object is unnecessary, thereby reducing disruptions during typing.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A method comprising:
receiving a selection of a character from a keyboard of a portable electronic device;
adding the character to a character string;
identifying candidate objects in reference data that include characters that match the character string;
displaying a plurality of the candidate objects on a display; and
when a gesture is detected on the keyboard,
identifying an object of the plurality of candidate objects, that is associated with the gesture; and
selecting the object.

2. The method according to claim 1, comprising ordering the candidate objects based on a criteria prior to displaying.

3. The method according to claim 1 or 2, wherein displaying comprises displaying the plurality of candidate objects in order.

4. The method according to claim 2, wherein the criteria comprises frequency of use of the candidate objects.

5. The method according to any of claims 1 to 4, wherein the reference data comprises objects in a dictionary database.

6. The method according to any of claims 1 to 5, wherein the gesture is associated with the object based on a direction of the gesture.

7. The method according to claim 6, wherein displaying comprising displaying candidate objects spaced at least partially around a location on the display.

8. The method according to claim 7, wherein the direction of the gesture is matched to a direction from the location on the display to the object.

9. The method according to any of claims 1 to 8, wherein the plurality of candidate objects are displayed near an edge of the display that is closest to the keyboard.

10. The method according to any of claims 1 to 9, wherein the display is spaced from the keyboard.

11. The method according to any of claims 1 to 10, wherein the gesture detected on the keyboard comprises a gesture across at least one key of the keyboard.

12. The method according to any of claims 1 to 11, wherein the gesture detected on the keyboard comprises a gesture across at least two keys of the keyboard.

13. A computer-readable medium having computer-readable code executable by at least one processor of the electronic device to perform the method of any of claims 1 to 12.

14. An electronic device comprising:
a keyboard including touch-sensitive keys;
a display spaced from the keyboard;
a processor coupled to the display and the keyboard and configured to receive a selection of a character from the keyboard, add the character to a character string, identify candidate objects in reference data that include characters that match the character string, display a plurality of the candidate objects on the display, and when a gesture is detected on the keyboard, identify one object of a plurality of candidate objects that is associated with the gesture and select the one object.

15. The electronic device according to claim 14, wherein the keyboard comprises a physical keyboard spaced from the display.

16. The electronic device according to claim 14 or 15, wherein the keyboard comprises a mechanical keyboard spaced from the display.

17. The electronic device according to any of claims 14 to 16, wherein displayed candidate objects are ordered based on a criteria.

18. The electronic device according to any of claims 14 to 17, wherein the gesture is associated with the object based on a direction of the gesture.

19. The electronic device according to claim 18, wherein the direction of the gesture is matched to a direction from a location on the display to the object.
